Europäisches Patentamt

European Patent Office

Office européen des brevets

(11) Publication number: **0 042 308**
A1

# EUROPEAN PATENT APPLICATION

(21) Application number: **81302736.4**

(22) Date of filing: **17.06.81**

(51) Int. Cl.³: **F 24 J 3/02**, F 03 G 7/02

(30) Priority: **18.06.80 JP 82300/80**

(43) Date of publication of application: **23.12.81**
**Bulletin 81/51**

(84) Designated Contracting States: **CH DE FR GB IT LI SE**

(71) Applicant: **MITSUBISHI GAS CHEMICAL COMPANY, INC., 5-2, Marunouchi 2-chome Chiyoda-Ku, Tokyo (JP)**

(72) Inventor: **Nakamura, Hiromi, 12-17 Nishiyama 2-chome, Kashiwa-shi Chiba-ken (JP)**

(74) Representative: **Coleman, Stanley et al, MATHYS & SQUIRE 10 Fleet Street, London EC4Y 1AY (GB)**

(54) **Method for recovering heat.**

(57) A method of recovering the head of hot water or a hot aqueous solution whose temperature is higher than the ambient temperature but lower than 200 °C, wherein air or a non-condensing gas is brought into direct countercurrent contact with the hot water or hot aqueous solution to provide a heated gas mixture of water vapor and air or non-condensing gas, and the heat is recovered in the form of the sensible heat of the resulting heated gas mixture and the latent heat of the water vapor in said mixture is disclosed.

# METHOD FOR RECOVERING HEAT

This invention relates to an effective method of recovering heat from waste process water, geothermal water and other fluids having a relatively low temperature of less than about 200°C. More specifically, this invention relates to a system for effective utilization of the heat energy recovered.

The recovery of heat energy from waste water from industrial process, geothermal water and other fluids that occur at a temperature lower than 200°C, usually between several tens of degrees to a hundred-over degrees Celsius has important significance to the economy of the industrial process concerned and the effective utilization of the earth's heat. Conventionally, the heat energy having a relatively low temperature as specified above is utilized by the following methods: heating a separate fluid by direct heat exchange with the fluid to be treated; flash evaporation to recover the heat in the form of the latent heat of water vapor; using a heat medium having a boiling point in the range of the temperature of the fluid to be treated, to thereby recover the heat in the form of the latent heat of the vapor of the medium; and combinations of these methods.

Waste water from industrial process, geothermal water and the like often contain dissolved matter and corrosive matter, and as a result of temperature variation due to heat recovery, the dissolved matter comes out of solution to form scale and the corrosive matter attacks the reactor, and these problems that are met with the currently used methods of heat recovery put severe limits on the design and manufacture of a commercially practicable heat recovering apparatus.

When the heat energy of geothermal water having a high content of dissolved matter is recovered by means of a heat surface area, the geothermal water has the lowest temperature on the heat surface area where a scale deposit is the easiest to form. Therefore, the formation of scale deposits on the heat surface area is unavoidable and efficient heat recovery becomes difficult. The apparatus for recovery of heat from waste process water or geothermal water that contains corrosive matter or which is not neutral must be made of a material having reasonable corrosion resistance, but this results in increased equipment cost. Since the apparatus is used to recover low-level energy, an excessive increase, in the equipment cost makes the very purpose of energy recovery meaningless. These defects are encountered with all conventional heat recovery methods except flash evaporation.

Being free from the defects mentioned above, flash evaporation to recover heat in the form of the latent heat of the resulting water vapor is the most effective but it still has the following flaws. Flashing must be performed at a temperature and pressure lower than those of the inlet through which waste process water or geothermal water is introduced, and unavoidably, the temperature and pressure levels of the heat energy recovered, i.e. the water vapor, are decreased. In the recovery of heat energy having a low temperature, the decrease in the temperature and pressure of the water energy recovered is every uneconomical since it means low availability of energy. In order to perform heat recovery by flash evaporation to the extent that the temperature is less than 100°C, the nature of water vapor requires the creation of vacuum which adds significantly to the complexity of the heat recovering operation. What is more, the increased volume of the resulting water vapor requires a large apparatus.

To provide an advantageous method for recovering the heat of waste water from industrial process, geothermal water and other fluids that have a relatively low temperature without experiencing the disadvantages met with the existing techniques, I have made various efforts and have successfully developed a heat recovery method that uses a mixture of water vapor and air or a non-condensing gas, as well as a system that effectively utilizes the heat recovered.

This invention relates to a method of recovering the heat of hot water or a hot aqueous solution, which is selected from the group consisting of waste process water and geothermal water and whose temperature is higher than the ambient temperature but lower than 200°C, preferably geothermal water wherein air or a non-condensing gas is brought into direct countercurrent contact with the hot water or hot aqueous solution to provide a heated gas mixture of water vapor and air or non-condensing gas, and the heat is recovered in the form of the sensible heat of the resulting heated gas mixture and the latent heat of the water vapor in said mixture.

Fig. 1 shows a flow sheet of heat utilizing system for recovering heat according to this invention; and

Fig. 2 shows a flow sheet of heat utilizing system for indirect heating.

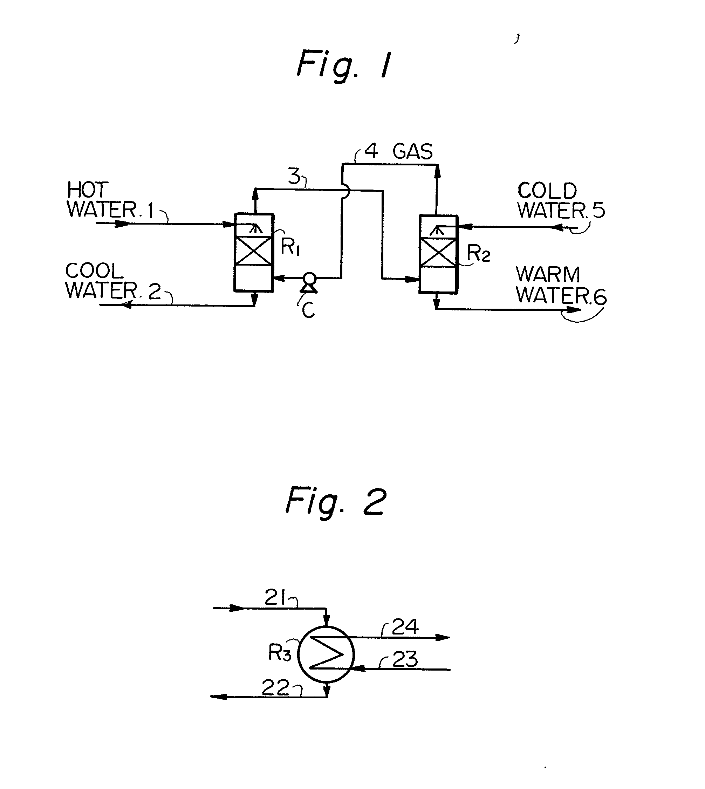

This invention is now illustrated in detail by reference to the non-limiting accompanying drawings. Fig. 1 depicts heat recovery and utilization according to one embodiment of this invention wherein water is heated by means of direct contact with a mixture of water vapor and air or non-condensing gas, and the air or non-condensing gas used is recycled for further use. In Fig. 1, hot water fed into the top of a heat recovery tower $R_1$ through a conduit 1 is brought into countercurrent contact with a mixture of water and air or non-condensing gas fed to the bottom of the tower by a blower C through a conduit 4, and the water has its heat recovered by partial evaporation. The water is then cooled and discharged through a conduit 2 as cool water. The mixture of water and air or non-condensing gas that has been brought into countercurrent contact with the hot water in the heat recovery tower $R_1$ has its temperature and moisture increased, and subsequently is introduced into a heat utilization tower $R_2$ through a conduit 3. The top of the tower $R_2$ is fed through a conduit 5 with cold water to be heated, and the cold water is brought into countercurrent contact with the hot and wet mixture of water vapor and air or non-condensing gas, and as a result of heating

- 4 -

accompanied by condensation of water vapor, the water becomes warm and is discharged through a conduit 6. The mixture of water vapor and air or non-condensing gas that has its temperature and moisture reduced in the tower $R_2$ leaves that tower and is sent back to the heat recovery tower $R_1$ by the blower C through the conduit.

As is clear from above explanation of Fig. 1, one feature of this invention is to use air or non-condensing gas as a carrier for the water vapor which is the primary medium for heat recovery. Since this invention uses air or non-condensing gas to recover the heat of waste process water or geothermal water in the form of water vapor produced by partial evaporation of the water, the following advantages result.

In the first place, operation in the heat recovery tower is carried out by the heat and mass transfer due to direct contact with the mixture of water vapor and air or non-condensing gas without using a heat transfer surface, so the precipitation of dissolved matter has no adverse effect on heat and mass transfer. This is one of the great advantages of this invention, and the formation of scale causes little or no reduction in the capacity of the heat recovery equipment. When the hot water is cooled, the dissolved matter comes out of solution, but the precipitate remains suspended in the water, so any solids can be discharged out of the system together with the cooled water without causing any adverse effect on heat recovery.

Secondly, the heat recovery tower can be operated in a flow system under a constant working pressure. The mixture of water vapor and air or non-condensing gas (hereunder collectively referred to as air) introduced into the bottom of the heat recovery tower by the working pressure has its moisture and temperature increased as a result of heat recovery through countercurrent contact with the hot water. In the heat recovery tower, the partial pressure of water vapor is increased and that of air decreased from bottom to top, to thereby provide a constant total working pressure. Operability at a constant pressure is a great advantage to heat recovery in a flow system, and it eliminates the cumbersome heat recovery as in flash evaporation that uses various levels of pressure.

Thirdly, as a result of heat recovery through countercurrent contact with the mixture of water vapor and air, recovery of latent heat due to the increase in the content of water vapor in the mixture occurs simultaneously with recovery of sensible heat due to the increase in the temperature of the mixture. This means the possibility of heat recovery with little drop in the temperature level according to this invention. The attendant advantages include increased availability of the heat energy recovered, and the expanded scope of applications of such energy. This means the process of this invention achieves heat recovery without as great a drop in temperature level as in flash evaporation.

The second feature of this invention consists in a new method of effective utilization of the heat energy thus recovered by the process described above. A large quantity of heat energy can be recovered from waste process water, geothermal water and the like, but since its temperature level is not very high, it cannot be directly used in the form of adaptive heat energy and it is sometimes used in the form of power. With current techniques for recovery, there is a great drop in the temperature level and other disadvantages such as sealing and the need of operation under vacuum. In contrast, the method of this invention suffers only a small drop in temperature level and it achieves the recovery of heat energy of high availability. As a result, it is capable of recovering heat energy in the form of power having high efficiency. When this invention is applied to the recovery of heat for use in generating power and if the waste process water or geothermal water to be treated is available in the form of a mixture of hot water and water vapor, heat may be recovered by mixing said water vapor with a mixture of air and water vapor as obtained in the heat recovery according to this invention.

This invention also provides a method for recycling air or non-condensing gas used as a carrier for heat energy.

- 6 -

Air itself is a non-condensing gas that is available most easily and at the lowest cost. If necessary, air may be discharged into atmosphere after a single use, but since geothermal water or waste process water may contain polluting substances, the process of this invention is preferably performed in a closed system. Another advantage of operation in a closed system is that the amount of heat energy lost in an open system by discharging a mixture of air or non-condensing gas and water vapor into atmosphere is reduced, with the attendant increase in the overall heat recovery efficiency.

Water or aqueous solution can be heated in the method of this invention by simply installing a heat utilization tower that performs an operation reverse to that of the heat recovery tower. Heat transfer in the heat recovery and heat utilization towers by direct contact with a mixture of water vapor and air or non-condensing gas involves partly the transfer of sensible heat and in a significant proportion, the transfer of latent heat due to the transfer of water vapor. Therefore, the overall heat transfer rate achieved by this invention is high enough, so the equipment can be made more compact and thus cut the equipment cost.

The present invention is further illustrated by the following non-limiting Examples and Controls.

Example 1

Heat recovery (production of a heated gas mixture)

The heat of waste process water containing saturated calcium sulfate was recovered in a flow system equivalent to the left half of Fig. 1 including a heat recovery tower $R_1$. The process conditions and the results are listed below.

Process conditions

| | |
|---|---|
| Operating pressure | 1.033 $Kg/cm^2$ |
| Flow rate of heated water | 70.000 Kg/hr |
| Inlet temp. | 90°C |
| Flow rate of saturated air | 3265 Kg/hr (dry basis) |
| Inlet temp. | 60°C |
| Content of water vapor | 497 Kg/hr |

Results

| | |
|---|---|
| Flow rate of heated water at outlet | 66870 Kg/hr |

| | |
|---|---|
| Outlet temp. | 64°C |
| Flow rate of saturated air | 3265 Kg/hr |
| Outlet temp. | 88°C |
| Content of water vapor | 3627 Kg/hr |
| Increase in water vapor content | 3130 Kg/hr |

There was no problem due to the deposition of solids in the heat recovery tower.

Example 2

Heat utilization (heating of cold water with heated gas mixture)

Cold water was heated in a flow system equivalent to the right half of Fig. 1 including a heat utilization tower $R_2$. The process conditions and the results are listed below.

Process conditions

| | |
|---|---|
| Operating pressure | 1.033 Kg/cm$^2$ |
| Flow rate of cold water | 30.000 Kg/hr |
| Inlet temp. | 10°C |
| Flow rate of saturated air | 3265 Kg/hr (dry basis) |
| Inlet temp. | 88°C |
| Content of water vapor | 3627 Kg/hr |

Results

| | |
|---|---|
| Flow rate of hot water | 33130 Kg/hr |
| Outlet temp. | 70°C |
| Outlet temp. | 60°C |
| Flow rate at outlet | 3265 Kg/hr |
| Content of water vapor | 497 Kg/hr |
| Condensed water produced | 3130 Kg/hr |

Fig. 2 shows another embodiment of a heat utilization tower. The tower is shown at $R_3$. Conduit 21 corresponds to conduit 3: conduit 22 corresponds to conduit 4: conduit 23 corresponds to conduit 5: and conduit 24 corresponds to conduit 6. In embodiment of Fig. 2, heated water vapor and air or non-condensing gas

- 8 -

does not contact with a gas or liquid to be heated.

The heated water vapor and air or non-condensing gas is introduced into tower $R_3$ through conduit 21 and heats air from conduit 23. The water vapor and air or non-condensing gas leaves tower $R_3$ and is sent back to heat recovery tower (not shown). Air introduced through conduit 23 is heated in tower $R_3$ and is withdrawn from conduit 24.

Example 3

Heat utilization (heating of air with heated gas mixture)

Air was heated in flow system as shown in Fig. 2. The process conditions and the results are listed below.

Process conditions

| | |
|---|---|
| Operating pressure | 1.033 Kg/cm$^2$ |
| Flow rate of air to be heated | 120.000 Kg/hr |
| Inlet temp. | 10°C |
| Flow rate of saturated air | 3210 Kg/hr (dry basis) |
| Inlet temp. | 88°C |
| Content of water vapor | 3566 Kg/hr |

Results

| | |
|---|---|
| Flow rate of air to be treated | 120.000 Kg/hr |
| Outlet temp. | 72.2°C |
| Flow rate of saturated air | 3210 Kg/hr |
| Outlet temp. | 60°C |
| Content of water vapor | 489 Kg/hr |
| Condensed water produced | 3077 Kg/hr |

- 9 -

We claim:

1. A method of recovering the heat of hot water or a hot aqueous solution whose temperature is higher than the ambient temperature but lower than 200°C, wherein air or a non-condensing gas is brought into direct countercurrent contact with the hot water or hot aqueous solution to provide a heated gas mixture of water vapor and air or non-condensing gas, and the heat is recovered in the form of the sensible heat of the resulting heated gas mixture and the latent heat of the water vapor in said mixture.

2. A method according to Claim 1 wherein the resulting heated gas mixture is directed to a gas expander to generate power.

3. A method according to Claim 1 wherein heat utilization is performed by bringing the resulting heated gas mixture into direct contact with water or aqueous solution in countercurrent or parallel flow, to obtain heated water or aqueous solution.

4. A method according to Claim 1 wherein the gas mixture discharged after use of the recovered heat is recycled for further use.

5. A method according to Claim 1 wherein the hot aqueous solution is geothermal water.

## Fig. 1

## Fig. 2

## European Patent Office

## EUROPEAN SEARCH REPORT

Application number

0042308

EP 81302736.4

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A1 - 2 741 477 (THOREN)<br>+ Totality +<br>-- | 1 | F 24 J 3/02<br>F 03 G 7/02. |
| | US - A - 4 063 418 (J.RODGER SHIELDS)<br>+ Totality +<br>-- | 1-5 | |
| A | US - A - 3 988 895 (ITZHAK SHEINBAUM)<br>+ Fig. 1-4 +<br>-- | 1,2,4,5 | |
| A | US - A - 4 089 175 (SAMUEL G.WOINSKY)<br>+ Fig. 1 +<br>-- | 1,2,4,5 | **TECHNICAL FIELDS SEARCHED (Int. Cl.³)**<br><br>F 24 J<br>F 24 H |
| A | US - A - 3 908 632 (HAROLD W.POULSEN)<br>+ Fig. 1 +<br>---- | 1 | F 03 G<br>F 01 K |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>VIENNA | Date of completion of the search<br>04-09-1981 | Examiner<br>SCHMIDT | |

EPO Form 1503.1   06.78